Europäisches Patentamt

European Patent Office

Office européen des brevets

(19)

(11) Numéro de publication: **0 284 464 B1**

## FASCICULE DE BREVET EUROPEEN

(12)

(45) Date de publication de fascicule du brevet: **30.09.92**

(51) Int. Cl.⁵: **F27B 1/10**, F27B 1/00, C04B 11/028

(21) Numéro de dépôt: **88400454.0**

(22) Date de dépôt: **29.02.88**

(54) **Four pour déshydrater pulvérulents sable et granulats.**

(30) Priorité: **16.03.87 FR 8703528**

(43) Date de publication de la demande:
**28.09.88 Bulletin 88/39**

(45) Mention de la délivrance du brevet:
**30.09.92 Bulletin 92/40**

(84) Etats contractants désignés:
**AT BE CH DE ES FR GB GR IT LI LU NL SE**

(56) Documents cités:
**DE-A- 3 145 549**
**DE-B- 1 240 626**
**FR-A- 979 494**
**GB-A- 2 153 055**
**US-A- 4 101 630**

(73) Titulaire: **Bergounhon, René**
**86, avenue Marceau**
**F-93700 Drancy(FR)**

(72) Inventeur: **Bergounhon, René**
**86, avenue Marceau**
**F-93700 Drancy(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

EP 0 284 464 B1

# Description

La présente invention concerne un dispositif pour déshydrater des sables, granulats ou pulvérulents particulièrement économe en énergie. Dans une application non limitative nous examinerons son emploi dans la cuisson en voie sèche ou humide du gypse broyé en fines et granulats. Cet exemple étant intéressant du fait de la mauvaise conductibilité thermique du gypse.

Lorsqu'on déshydrate du gypse à une pression voisine ou inférieure à $10^5$ Pascal ( 1 bar), l'eau du gypse s'élimine à l'état de vapeur sèche et on obtient un solide microporeux constitué d'un assemblage lâche de microcristallites que l'on appelle plâtre de variété $\beta$.

Si l'on réalise la déshydratation du gypse à une pression supérieure à $10^5$ Pascal en milieu liquide, on obtient un solide cristallin d'apparence hexagonale qui est le plâtre de variété $\alpha$. Ce dernier a des caractéristiques bien meilleures que celles de la variété $\beta$, car il nécessite une quantité d'eau de mélange bien inférieure. Mais les procédés de fabrication par lesquels on le fabrique sont très onéreux, en raison de la grande consommation d'énergie et des moyens matériels qu'ils nécessitent.

En effet, cette varité de plâtre est produite dans des autoclaves en haute température dont la pression interne est portée de 5 à $7 \times 10^5$ Pascal. C'est pourquoi la variété $\alpha$ n'est produite dans le monde qu'en faible quantité par rapport à la variété $\beta$ et n'est réservée qu'à quelques applications spéciales où l'on exige des caractéristiques mécaniques très élevées pour le plâtre.

En réalité, les variétés $\alpha$ et $\beta$ ne sont que des termes extrêmes d'une serie de variétés intermédiaires présentant des états de cristallisation plus ou moins marqués. Ces variétés que l'on appelle variétés $\alpha$ de basse pression, présentent des résistances mécaniques largement supérieures à celle de la variété $\beta$.

Dans l'industrie la plus grande partie du plâtre $\alpha$ est employée mélangée à du plâtre $\beta$ pour enrichir celui-ci de manière à avoir des caractéristiques intermédiaires identiques à celles des variétés $\alpha$ de basse pression.

La déshydratation du gypse est traditionnellement réalisée dans des fours rotatifs ou dans des marmites statiques possédant des mélangeurs mécaniques internes ou dans tout autre système capable de produire des calories et de les transmettre au gypse pour en évaporer l'eau d'hydratation; La montée en température du gypse s'effectuant dans une ambiance sèche ou humide. Les calories sont produites par des générateurs employant des combustibles industriel et élevant la température du gypse soit au contact direct des gaz de combustion soit par un contact indirect au travers d'échangeurs gazeux, liquides, réfractaires, métalliques ou autres. Dans ces types de four, l'échange thermique entre les produits à traiter, les gaz chauds ou les parois chaudes est réalisé par le brassage des produits et les multiples passages de ceux-ci dans les zones chaudes. Dans d'autres procédés, le produit à traiter est sensiblement statique, l'échange thermique étant réalisé par de multiples passages des gaz chauds recyclés, de manière à recupérer le maximum d'énergie thermique avant leurs rejets. La totalité de ces fours connu pour produire du semi-hydrate $\beta$ ou du surcuit travaille à pression atmosphérique en atmosphère sèche.

Dans le cas par exemple du four Renaudin objet du brevet d'invention n° 979 494, on voit que les entrées et sorties sont ouvertes à la pression atmosphérique et la déshydratation est effectuée en atmosphère sèche, le produit à l'écoulement près est immobile par rapport au gaz chaud non recyclé. Un tel dispositif ne permet pas un échange thermique convenable, d'autant qu'il est apporté un soin particulier à éliminer la vapeur d'eau produite pour éviter l'ébullition du gypse dans son eau organique, l'inventeur trouvant cette manière préférable.

Un autre système décrit dans le brevet Allemand n° 31 45 549 étudié pour déshydrater du gypse sous forme de blocs montre également un procédé ou le produit à traiter est sensiblement immobile à l'écoulement près. Il s'agit également d'un système ouvert à la pression atmosphérique sèche ne pouvant traiter que des blocs, la partie basse du four travaillant en équicourant, les gaz chauds ne sauraient traverser des éléments fins sans provoquer un bouchon. Les blocs ne permettent pas un échange thermique convenable, le recyclage des gaz est indispensable et semble très élaboré.

Un autre système également connu consiste à déshydrater le gypse pendant son transport pneumatique du point d'entrée au point de sortie du four. Dans ce cas le produit traité est réduit en fines particules et se déplace à la vitesse du gaz chaud. Le temps d'échange thermique est de l'ordre de la seconde. Les gaz chauds sont nécessairement recyclés et à moins d'avoir un conduit de cuisson très long, le produit doit être également reyclé. Le produit et le gaz sont séparés en fin de traitement. L'ensemble du traitement est à pression d'atmosphère sèche. Une réalisation de ce système est décrite dans le brevet U.S.A. n° 4 101 630 dans lequel le long conduit de cuisson est formé par l'assemblage de deux tubes concentriques reliés par une paroi hélicoïdale. Cette disposition peu encombrante présente le risque de dépôt de la matière au cours du transport sur la paroi hélicoïdale. Ces appareils sont généralement verticaux.

Le débit en plâtre de ces différents fours peut être soit séquenciel soit continu.

Du fait des difficultés rencontrées pour transmettre les calories au gypse, les températures utilisées sont très largement supérieures aux températures théoriques de transformation et alors que 140 Calories (585.8 J) sont nécessaires pour transformer 1 Kg de gypse en semi-hydrate c'est pratiquement 300 à 400 Calories (1255.2 à 1673.6 J) qui sont consommées par l'ensemble de ces appareils sans compter l'énergie nécessaire aux mécaniques de mélange ainsi qu'au dépoussièrage de l'ensemble. Les pertes sont dues aux températures élevées du plâtre, des gaz de combustion en sortie, de la masse importante d'air traversant les fours pour évacuer la vapeur d'eau, aux radiations vers l'extérieur, le calorifugeage n'étant pas toujours possible.

Le dispositif selon l'invention que nous appellerons four vertical statique décrit dans les revendications 1 à 6 permet de remédier à ces inconvénients. Il permet en outre de produire du semi-hydrate allant de la variété $\beta$ jusqu'à des formes de cristallisation avancée de semi-hydrate $\alpha$ de basse pression par simple réglage de la pression de traitement dans des conditions particulièrement avantageuses de consommation d'énergie.

Il comprend une enveloppe extérieure calorifugée (1) de forme par exemple cylindrique protégée par un isolant (9) et une enveloppe intérieure concentrique (6) formant la chambre de combustion. A la partie supérieure de cette chambre de combustion (6) est logé un brûleur (11) auquel sont amenés sous pression supérieure à la pression intérieure du four, combustible et air de combustion. Un allumage automatique permet de mettre le brûleur en service. Dans l'espace compris entre les enveloppes (1) et (6), il est placé une première série de parois tronconiques (10) raccordées par leur bord supérieur à l'enveloppe extérieure (1) à des niveaux différents. Les bords inférieurs des parois (10) définissent avec l'enveloppe intérieure (6) une série de passages annulaires étroits (18). Une seconde série de parois tronconiques (7) intercalées avec celles de la première série, raccordées par leur bords supérieurs à l'enveloppe intérieure (6) définissent entre leurs bords inférieurs et l'enveloppe extérieure (1) de seconds passages annulaires étroits (17). L'enveloppe intérieure (6) se termine à son bord inférieur à faible distance de la paroi de fond (19) de l'enveloppe (1) définis sant avec celle-ci un passage annulaire étroit.

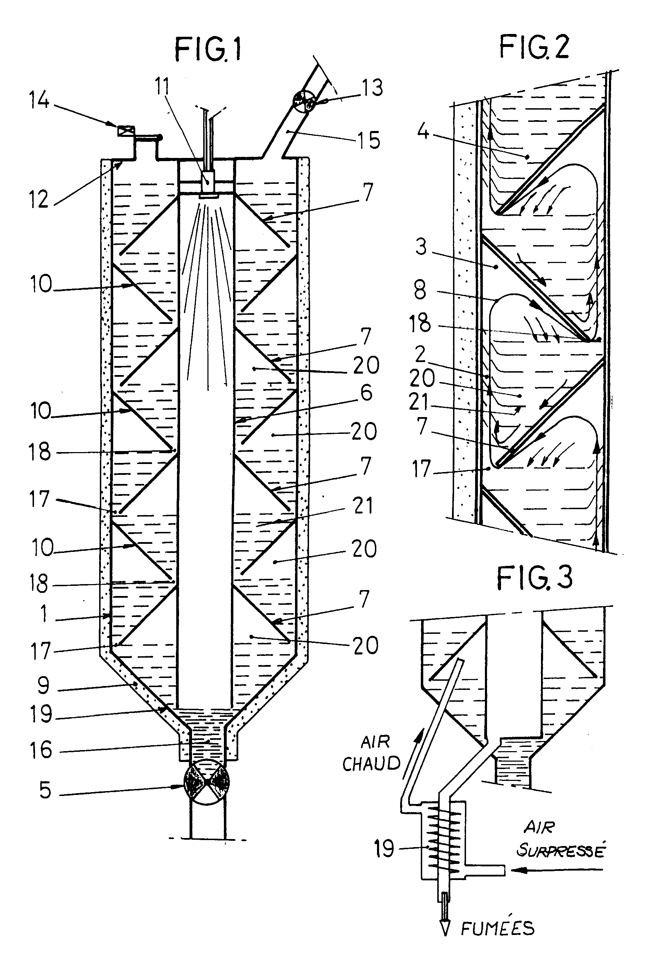

L'ensemble des parois cylindriques (1) et (6) et des parois tronconiques (7) et (10) définissent des chambres de mélange ou sas (20). La conicité des parois (7) et (10) a été calculée pour permettre l'écoulement par gravité du produit à traiter jusqu'à remplir successivement les chambres de mélange (20) inférieure jusqu'au remplissage des passages annulaires (7) et (10). L'air de combustion s'échappant par le bas de l'enveloppe intérieure (6) et remontant à travers les sas (20) fluidise et transporte le produit à traiter dans la zone (2) de chaque sas (20) établissant un niveau horizontal à hauteur du passage annulaire étroit (17) et (18) supérieurs correspondant, établissant ainsi rigoureusement le volume de remplissage du four laissant libre des volumes de détente (3). La pesée en continu de l'ensemble du four avec produit à traiter permet de contrôler que lors du fontionnement le produit introduit par l'orifice supérieur (15) compense constament le produit traité extrait par l'orifice (16). La figure 2 montre le détail des mouvements s'accomplissant à l'intérieur d'un sas ou chambre de mélange (20)

Les gaz de combustion traversent la masse du produit à traiter dans la zone (2) de moindre perte de charge sur une largeur définie par la largeur de l'orifice annulaire inférieur (17) correspondant, calculé pour que la densité du débit des gaz de combustion dans cette zone (2) provoque le transport pneumatique du produit de la zone (2) dans le volume de détente (3), laquelle détente provoque la séparation de la matière et sa dépose sur la surface supérieure du produit contenu dans le sas considéré, les gaz de combustion poursuivant leur chemin suivant la flèche (8). Simultanément l'écoulement du produit (21) sur les parois tronconiques (7) et (10) vient combler la zone (2) en traversant le passage annulaire (17). Le produit est ainsi animé d'un mouvement de rotation annulaire dans le sas considéré, lequel mouvement de rotation s'opérera dans le sas supérieur en sens inverse jusqu'à échappement des gaz de combustion (8) en sortie supérieure(14).

Au cours des 40 mn de séjour à l'intérieur du four le produit parcourt ainsi un chemin de plusieurs kilomètres de longueur. Les gaz de combustion ont libérés la totalité de leur énergie calorifique, une régulation automatique assurant le maintien de leur température légèrement au dessus du point de rosée. La saturation extrême des gaz de combustion en vapeur d'eau est telle qu'il est extrait 1000 g d'eau par $Nm^3$ d'air de combustion introduit au brûleur.

La matière nouvelle introduite par l'orifice (15) étant froide condense une partie de cette eau, c'est ainsi que dans une certaine hauteur du four le gypse est monté en température dans une zone humide, le séchage s'effectue dans la seconde partie du four sous pression par suite de la perte de charge provoquée lors du passage des gaz au travers du produit contenu dans la première partie du four. Cette pression pourra être augmentée afin d'accroître la cristallisation en semi-hydrate $\alpha$ par

réglage de la soupape(14) placée sur l'orifice de sortie des gaz de combustion et vapeur d'eau. Sur l'orifice de sortie (16) il est placé un système de contrôle de débit qui peut être par exemple une écluse rotative (5) ou une vis d'Archimède.

L'étanchéité du système est assurée par le produit lui-même qui comprimé par la pression intérieur du four forme un bouchon dans l'orifice (16).

Lors du débit continu du produit traité, ce bouchon est constament régénéré par l'apport de produit venant du sas supérieur au travers de l'espace annulaire formé par le fond (19) et le bas de l'enveloppe intérieure (16). Cet écoulement de produit sera répercuté de sas en sas (20) d'une manière continue au travers des orifices annulaires (17) et (18) sur toute la hauteur du four en maintenant le niveau horizontal du produit au ras des orifices annulaires (17) et (18). Le pesage en continu du four et de son contenu permet d'assurer le maintien du niveau constant en commandant l'introduction du produit à traiter par l'orifice (15) à l'aide d'une écluse rotative (13).

On remarque donc qu'une petite partie du produit à traiter, tournant dans chaque sas (20), ne retourne pas en zone (2) de transport pneumatique en s'écoulant sur les parois tronconiques mais traverse les orifices annulaires (17) et (18) dès que le niveau dans le sas inférieur tend à descendre, afin de le rétablir. Le nombre de sas (20) nécessaire à la bonne marche du système est fonction du calcul des orifices annulaires (17) et (18) autorisant une différence de densité maximum de manière à ce que les produits situés dans le haut du four et plus lourds que les produits du bas ne descendent pas par lesdits orifices (17) et (18) sans necessité de maintenir le niveau dans le sas inférieur.

Le gaz qui traverse sous pression le produit de bas en haut peut très bien être indépendant des gaz de combustion (figure 3). Dans ce cas ,les gaz de combustion sont envoyés dans un échangeur (19) qui réchauffe l'air surpressé destiné à traverser le produit évitant ainsi une pollution du produit par les gaz de combustion et une combustion à grande pression dans le cas ou une grande pression est nécessaire au traitement.

La qualité de l'échange thermique montre que du gypse traversant ce four en 40 mn pouvait être traité à 120° C pour obtenir du semi-hydrate $\beta$ ou $\alpha$ de basse pression. Cette basse température est due à l'amélioration de la conductibilité du gypse chauffé en atmosphère humide dans la partie supérieur du four et maintenue au dessus de la température de transformation pendant une grande partie du cycle.

Les essais effectués dans le système où les gaz de combustion, traversant directement le gypse dans sa hauteur, à partir de la base de la chambre de combustion (6) ont donnés des consommations de 150 Calories (627.6 J) par kilo de gypse traité sans qu'il ne soit consommé aucune énergie autre que celle nécessaire à la marche du brûleur.

Ce résultat très proche de la théorie est obtenu par le fait que la seule énergie s'échappant du four est contenue dans le plâtre à 120°C en sortie inférieure ainsi que dans la vapeur d'eau et les gaz de combustion à 95°C s'échappant en partie supérieure. Ces gaz de combustion étant en quantité minimale nécessaire, la concentration en eau est d'environ 1 kg par $Nm^3$ d'air introduit au brûleur.

On conçoit facilement qu'en portant la pression dans le four à environ $2 \times 10^5$ Pascal qu'il soit possible de porter le gypse à son point de transformation en phase humide et de produire ainsi du semi-hydrate Alpha en cycle continu.

## Revendications

1. Four vertical statique à débit continu destiné à la déshydratation en pression des produits granuleux ou pulvérulents en voie sèche ou humide, tel que le gypse, comprenant une enveloppe extérieure calorifugée (1) dans laquelle les produits à traiter sont déversés par le sommet (15) et sont soutirés après traitement à travers un orifice (16) prévu dans la paroi de fond (19), et une enveloppe intérieure concentrique (6) formant chambre de combustion, dont la partie supérieure loge un brûleur (11), ledit four étant caractérisé en ce qu'il comprend en outre dans l'espace compris entre les deux enveloppes (1) et (6), une première série de parois tronconiques ( 10) raccordées par leur bord supérieur à l'enveloppe extérieure (1) à des niveaux différents et dont les bords inférieurs définissent avec l'enveloppe intérieure (6) de premiers passages annulaires étroits (18), et une deuxième série de parois tronconiques (7) intercalées avec celles de la première série, raccordées par leur bord supérieur à l'enveloppe intérieure (6) et dont les bords inférieurs définissent avec l'enveloppe extérieure(1) de seconds passages annulaires étroits (17), en ce que l'enveloppe intérieure (6) se termine à son bord inférieur à faible distance de la paroi de fond (19) de l'enveloppe extérieure (1) afin de permettre le passage des gaz chauds (8) à contre courant dans l'espace inter-enveloppes sur toute la hauteur du four, en ce que ledit orifice (16) est muni d'une écluse de sortie (5).

2. Four selon la revendication 1, caractérisé en ce qu'il comporte un couvercle étanche (12) équipé d'une soupape de décharge (14) et d'une écluse d'admission de produit (13), permettant d'obtenir une pression suffisante pour assurer le traitement à 120° C du gypse en atmosphère humide et obtenir du semi-hydrate Alpha en cycle continu.

3. Four selon la revendication 1, caractérisé en ce que la pression interne peut être établie par l'apport d'un gaz moteur, tel que l'air extérieur surpressé, rechauffé dans un échangeur de chaleur afin d'éviter une combustion en haute pression et une éventuelle pollution du produit à traiter par les fumées.

4. Four selon la revendication 1, caractérisé en ce que lesdites parois tronconiques (7) et (10) definissant avec les enveloppes (1) et (6) des chambres de mélange ou sas (20) dans chacune desquelles le produit à traiter (21) s'accumule sensiblement jusqu'au niveau du bord inférieur des parois tronconiques correspondantes, laissant libre des volumes de détente (3), le mélange gazeux traversant chaque sas suivant la flèche (8) réalisant un transport pneumatique dans la zone (2) du produit (21) parallèlement aux parois verticales (1) et (6) puis sa dépose en surface des volumes de détente (3), l'espace libéré par le produit (21) transporté étant simultanément comblé par l'écoulement dudit produit (21) sur les parois tronconiques (7) et (10) en traversant les passages annulaires (17) ou (18) en direction de la zone de transport pneumatique (2), la section desdit passages annulaires (17) et (18) étant calculée de manière à permettre cette traversée ou permettre un écoulement simultané du produit (21) vers le sas inférieur correspondant, son niveau de produit (21) baissant par suite du soutirage dudit produit (21) par l'orifice (16).

5. Four selon l'une des revendications 1 et 4, caractérisé en ce que le mélange gazeux s'échappant par la base de l'enveloppe intérieure (6) et remontant à travers des sas (20), entraîne la vapeur d'eau contenue dans les produits en cours de traitement, humidifiant les produits froids nouvellement introduits, améliorant ainsi leur conductibilité thermique.

6. Four selon la revendication 4, caractérisé en ce que l'écluse de sortie (5) permet de réaliser une régulation constante du débit du four tout en maintenant la pression intérieure sans fuites grâce à un bouchon de produit traité, comprimé par la pression intérieure, accumulé entre ladite écluse (5) et le bas de l'enveloppe (6), ledit bouchon conservant l'étanchéíte grâce à

sa régénération continue par l'apport de produit contenu dans le sas (20) supérieur lors du soutirage par l'écluse (5).

## Claims

1. A static vertical kiln with a continuous throughput designed to dehydrate granular or powdered products such as gypsum under pressure by the dry or moist route, comprising a heat-insulated outer shell (1) into which the products to be treated are shot from the top (15) and from which they are withdrawn after treatment through a port (16) provided in the end wall (19), and a concentric inner shell (6) forming a combustion chamber, the upper part of which houses a burner (11), characterised in that it further comprises, in the space between the two shells (1) and (6), a first series of frustoconical walls (10) joined to the outer shell (1) by their upper edges at different levels, with their lower edges defining first narrow annular passages (18) with the inner shell (6), and a second series of frustoconical walls (7) intercalated between those of the first series, which are joined to the inner shell (6) by their upper edges, with their lower edges defining second narrow annular passages (17) with the outer shell (1), that the inner shell (6) ends at its lower edge a short distance away from the end wall (19) of the outer shell (1), in order to allow hot gases (8) to pass in a counter-current flow in the space between the shells over the whole height of the kiln, and that the port (16) is provided with a discharge rotary feeder (5).

2. The kiln of claim 1, characterised in that it has a tight cover (12) fitted with a discharge valve (14) and a rotary feeder (13) to admit the product, enabling sufficient pressure to be obtained to carry out the gypsum treatment at 120°C in a humid atmosphere, and alpha half-hydrate to be obtained in a continuous cycle.

3. The kiln of claim 1, characterised in that the internal pressure may be set up by supplying a driving gas, such as high-pressure external air, which is heated in a heat exchanger in order to avoid combustion at high pressure and possible pollution of the product to be treated by the fumes.

4. The kiln of claim 1, characterised in that the frustoconical walls (7) and (10) define mixing chambers or lock chambers (20) with the shells (1) and (6), in each of which chambers the product (21) to be treated accumulates substantially to the level of the lower edge of the corresponding frustoconical walls, leaving the pressure reduction volumes (3) free, that the gaseous mixture passing through each lock chamber in the direction of the arrow (8) pneumatically transports the product (21) in the zone (2) parallel with the vertical walls (1) and (6) then deposits it on the surface of the pressure reduction volumes (3), that the space freed by the transported product (21) is simultaneously filled by the flow of said product (21) over the frustoconical walls (7) and (10), passing through the annular passages (17) or (18) in the direction of the pneumatic transport zone (2), and that the cross-section of the annular passages (17) and (18) is calculated so as to allow the product (21) to pass or allow it to flow simultaneously towards the corresponding lower lock chamber, its product (21) level dropping as a result of the product (21) being withdrawn through the port (16).

5. The kiln of claim 1 or 4, characterised in that the gaseous mixture which escapes through the bottom of the inner shell (6) and reascends through the lock chambers (20) entrains the steam contained in the products being treated, moistening the cold products newly introduced and thus improving their heat conductivity.

6. The kiln of claim 4, characterised in that the discharge rotary feeder (5) enables the throughput of the kiln to be constantly regulated while maintaining the internal pressure without any leakages, owing to a plug of treated product, compressed by the internal pressure, which accumulates between said rotary feeder (5) and the bottom of the shell (6), the plug maintaining impermeability owing to its continuous regeneration through the provision of product contained in the upper lock chamber (20) when product is withdrawn through the rotary feeder (5).

## Patentansprüche

1. Vertikaler, statischer Ofen mit kontinuierlichem Durchsatz zur Entwässerung unter Druck von körnigen oder pulverförmigen Produkten, wie etwa von Gips, auf trockene oder nasse Weise, welcher Ofen aufweist: einen äußeren, wärmeisolierten Mantel (1), in welchen die zu behandelnden Produkte am oberen Teil (15) eingegeben und nach der Behandlung durch eine in der Bodenwand (19) vorgesehene Öffnung (16) abgezogen werden, und einen inneren konzentrischen Mantel (6), der die Brennkammer bildet, deren oberer Teil einen Brenner (11) aufweist, wobei der Ofen **dadurch gekennzeich-**

**net** ist, daß er außerdem in dem zwischen den beiden Mänteln (1) und (6) gebildeten Raum eine erste Reihe von kegelstumpfförmigen Wänden (10) aufweist, die mit ihrem oberen Rand an dem Außenmantel (1) in unterschiedlichen Höhen verbunden sind und deren untere Ränder mit dem Innenmantel (6) erste enge ringförmige Durchgänge (18) bilden, sowie eine zweite Reihe von kegelstumpfförmigen Wänden (7), die versetzt sind gegenüber jenen der ersten Reihe, an ihrem oberen Rand mit dem Innenmantel (6) verbunden sind und deren untere Ränder mit dem Außenmantel (1) zweite enge ringförmige Durchgänge (17) bilden, daß der Innenmantel (6) mit seinem unteren Rand in geringem Abstand von der Bodenwand (19) des Außenmantels (1) endet, um den Durchgang der heißen Gase (8) im Gegenstrom in dem Zwischenmantelraum auf der ganzen Höhe des Ofens zu gestatten, und daß die genannte Öffnung (16) mit einer Ausgangsschleuse (5) ausgestattet ist.

2. Ofen nach Anspruch 1, **dadurch gekennzeichnet,** daß er einen dichten Deckel (12) aufweist, der ein Auslaßventil (14) und eine Produktzufuhrschleuse (13) besitzt, um einen Druck zu erreichen, der zur Behandlung des Gipses bei 120°C in feuchter Atmosphäre und zur Gewinnung von Alpha-Halbhydrat in kontinuierlichem Umlauf ausreicht.

3. Ofen nach Anspruch 1, **dadurch gekennzeichnet,** daß der Innendruck durch ein Antriebsgas, wie gespannte Außenluft, errichtet wird, welche in einem Wärmetauscher wieder erhitzt wird, um eine Verbrennung bei hohem Druck und eine eventuelle Verunreinigung des zu behandelnden Produktes durch die Rauchgase zu vermeiden.

4. Ofen nach Anspruch 1, **dadurch gekennzeichnet,** daß die genannten kegelstumpfförmigen Wände (7) und (10), die mit den Mänteln (1) und (6) die Mischräume oder Stauräume (20) bilden, wobei sich in jeder derselben das zu behandelnde Produkt (21) im wesentlichen bis zu der Höhe des unteren Randes der entsprechenden kegelstumpfförmigen Wände ansammelt und Entspannungsräume (3) freiläßt, die gasförmige Mischung jeden Stauraum in Richtung des Pfeils (8) durchsetzt und einen pneumatischen Transport des Produktes (21) im Bereich (2) parallel zu den vertikalen Wänden (1) und (6) bewirkt, worauf sich dieses auf der Oberfläche der Entspannungsräume (3) absetzt und der von dem transportierten Produkt (21) freigelassene Raum gleichzeitig von dem Strom dieses Produkts (21) auf den kegelstumpfförmigen Wänden (7) un (10) angefüllt wird, wenn die ringförmigen Durchgänge (17) oder (18) in Richtung des Bereichs des pneumatischen Transports (2) durchsetzt werden, wobei der Querschnitt dieser ringförmigen Räume (17) und (18) so berechnet wird, daß er diesen Durchgang oder ein gleichzeitiges Fließen des Produktes (21) zu dem entsprechenden unteren Stauraum gestattet, wobei sich das Niveau des Produktes (21) in der Folge des Abgangs des Produktes (21) durch die Öffnung (16) senkt.

5. Ofen nach Anspruch 1 und 4, **dadurch gekennzeichnet,** daß die am Boden des Innenmantels (6) abgehende Gasmischung, die durch die Stauräume (20) wieder aufsteigt, den in den Produkten enthaltenen Wasserdampf während der Behandlung mitnimmt, die zugeführten, kalten, neuen Produkte anfeuchtet und somit ihre thermische Leitfähigkeit verbessert.

6. Ofen nach Anspruch 4, **dadurch gekennzeichnet,** daß die Ausgangsschleuse (5) eine konstante Regulierung des Durchsatzes durch den Ofen gestattet, wobei der Innendruck durch die Wirkung eines Propfens aus behandeltem, durch den Innendruck komprimiertem Produkt dicht gehalten wird, welcher Pfropfen sich zwischen der genannten Schleuse (5) und dem Boden des Mantels (6) anreichert und die Abdichtung durch seine kontinuierliche Wiederbildung durch Zufuhr von Produkt, das in dem oberen Stauraum (20) enthalten ist und durch die Schleuse (5) abgezogen wird, aufrecht hält.

# FIG.1

# FIG.2

# FIG.3

AIR CHAUD

AIR SURPRESSÉ

FUMÉES